# EUROPEAN PATENT APPLICATION

(11) **EP 1 748 315 A1**
(43) Date of publication of application: **31.01.2007**
(21) Application number: 06117815.8
(22) Date of filing: 25.07.2006
(51) Int. Cl.: G03B 21/16

(54) **A Projector**

(30) Priority: 26.07.2005 KR 20050068053
(71) Applicant: SAMSUNG ELECTRONICS CO., LTD., Suwon-City, Kyungki-do (KR)
(72) Inventor: WOO, Sung-je, Gyeonggi-do (KR); KIM, Won-nyun, Gyeonggi-do (KR); Kang,Byung-jo, Yeongtong-gu Suwon-si Gyeonggi-do (KR)
(74) Representative: Grey, Ian Michael

(57) **Abstract**

A projector is disclosed. The projector has a plurality of components that generate heat when the projector is in use and, a plurality of separate heat absorbing elements for absorbing heat generated by said heat generating components. Means are provided for transferring heat between said separate heat absorbing elements.

## Description

The present invention relates to a projector and more specifically to an image projecting apparatus. More particularly, the present invention relates to an image projecting apparatus with improved cooling efficiency.

A conventional image projecting apparatus generally includes an optical system having an image forming device and a light source that supplies light to the optical system to project and enlarge images formed by the image device onto a screen.

It has recently become desirable to provide image projection equipment which is small in size and light in weight. However, a problem associated with these factors is the dissipation of heat generated internally to outside the apparatus.

A conventional image projecting apparatus includes a plurality of heat generating units. For example, a light source, such as a lamp or LED emits heat in addition to irradiating light. The emitted heat may cause malfunctioning of components that are sensitive to heat such as circuit boards resulting in deterioration in performance and abnormal functioning.

Attempts to address the aforementioned problem has been made by providing a conventional image projecting apparatus with a plurality of cooling fans (for example, Korea first patent publication No. 2002-008902). Alternatively, or in addition, it is known to provide a conventional image projecting apparatus with a guide element, such as a duct, to provide a supply of cooler outside air to each heat generating unit (for example, Korea patent application No. 1996-057169).

Although the aforementioned steps have alleviated the problem, the use of a plurality of cooling fans add to the overall noise generated by the image projecting apparatus. Similarly, when guide elements are adopted, the overall structure of the cooling system becomes complicated. Furthermore, both these proposals necessitate an increase in volume of the cooling system, so they cannot be easily adopted in an image projecting apparatus of small size and weight.

It will also be appreciated that, as a conventional image projecting apparatus includes the cooling system as one integrated unit, the whole unit must be assembled and disassembled when the image projecting apparatus is assembled during manufacture or when it is repaired.

The present invention seeks to overcome or substantially alleviate the problems with a conventional image projecting apparatus, such as those referred to above.

According to the present invention, there is provided a projector having a plurality of components that generate heat when the projector is in use, a plurality of separate heat absorbing elements for absorbing heat generated by said heat generating components and, means for transferring heat between said separate heat absorbing elements. As the heat absorbing elements are separate to each other, it provides the projector with a modular construction and makes it easier to assemble and disassemble.

In one embodiment, said plurality of heat generating components include a light generating portion and an image forming device for forming images using light irradiated by the light generating portion.

The plurality of separate heat absorbing elements may comprise a first heat absorbing element to absorb heat generated by the image forming device and, a second heat absorbing element to absorb heat generated by the light generating portion, and said means for transferring heat between said separate heat absorbing elements comprises means for transferring heat between said first and second heat absorbing elements.

The projector may include a heat dissipating portion for dissipating heat from said first and second heat absorbing elements.

In one embodiment, the heat dissipating portion comprises a heat sink and a cooling fan to blow air towards the heat sink.

Embodiments of the invention will now be described, by way of example only, with reference to the accompanying drawings, in which:-
Figure 1 is an exploded perspective view of the image projecting apparatus according to an exemplary embodiment of the present invention;
Figure 2 is an enlarged perspective view of the cooling system of the image projecting apparatus of Figure 1;
Figures 3 and 4 are perspective views of the image projecting apparatus illustrating the combining process of the cooling system; and
Figure 5 is a perspective view showing a rear side of an external appearance of the image projecting apparatus of Figure 1.

Although the exemplary embodiments of the present invention described hereinafter relate to a Digital Micromirror Device (DMD) panel as an image device, it will be appreciated that the present invention is not limited to such an image projecting apparatus.

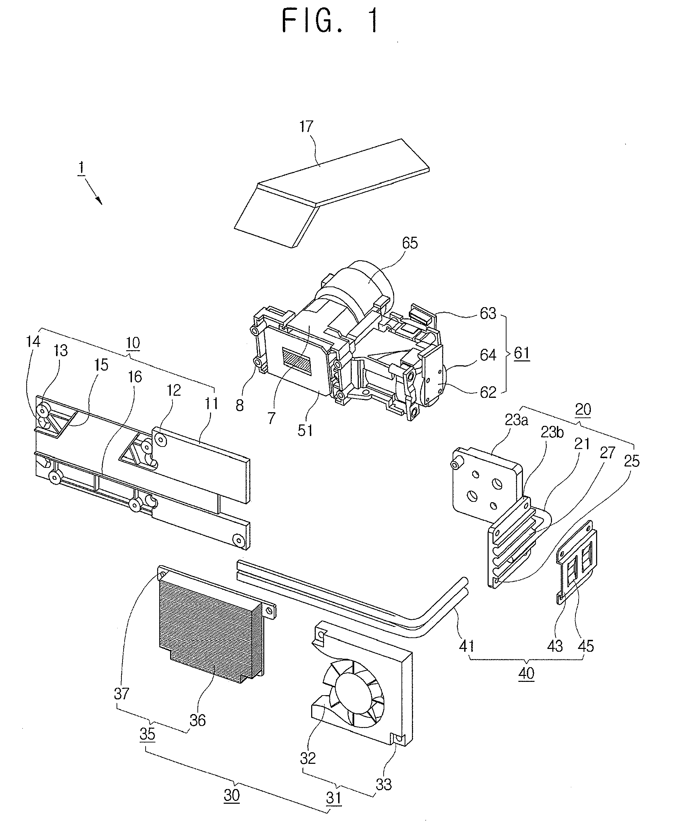

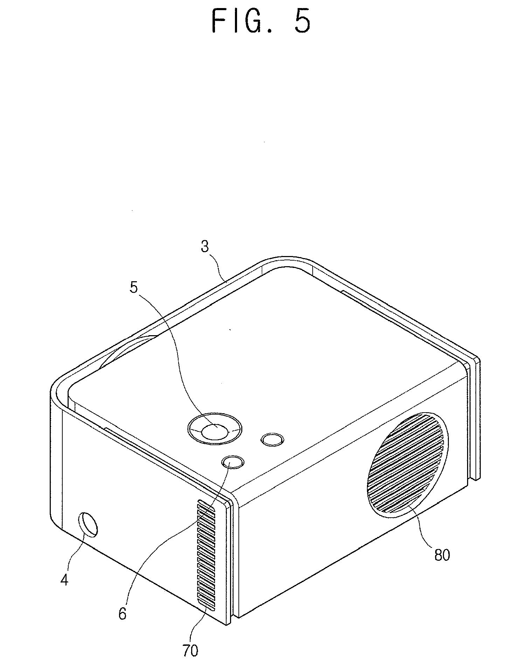

Figure 1 is an exploded perspective view of an image projecting apparatus 1 which includes a housing 3 (see Figure 5), a body portion 7 accommodated in the housing 3, and a light generating portion 61 supported by the body portion 7. An image device 51 forms images using light irradiated by the light generating portion 61 and a first heat absorbing element 10 absorbs heat generated by the image device 51. A second heat absorbing element 20 absorbs heat generated by the light generating portion 61 and a heat dissipating portion 30 transfers heat to one of the first or second heat absorbing elements 10, 20. A linking member 40 separably links the first and second heat absorbing parts 10, 20 to transfer heat therebetween. The image projecting apparatus 1 may further include a projecting lens 65 through which the image formed by the image device 51 is projected.

The light generating portion 61 includes a light source, such as an LED (Light Emitting Diode), to irradiate light and light source circuit boards 62, 63 to drive the light source.
A plurality of LED's may be provided to irradiate lights having red, green and blue colors, respectively and one or more of the LED's may be mounted to the LED circuit boards 62, 63. For example, the LED that irradiates green light may be mounted to the first LED circuit board 62, and the LED's that irradiate blue light and red light may be mounted to the second LED circuit board 63.

The light generating part 61 may further include a heat dissipating plate 64 provided on one side of the LED circuit boards 62, 63 to dissipate the heat generated by the LED. Instead of LED's, the light generating portion 61 may be as an arc-type discharge lamp, such as a mercury lamp, a metal halide lamp and a Xenon lamp.

The image device 51, which generates an image signal by using the light irradiated by the light generating portion 61, may include a DMD (Digital Micromirror Device) panel, a CRT (Cathode-Ray Tube) panel or an LCD (Liquid Crystal Display) panel.

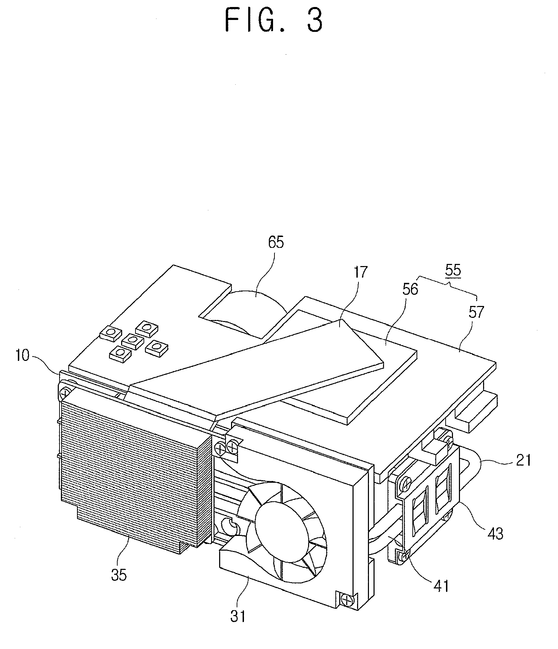

The driving part 55 is electrically connected to the image device 51 to drive the image device (see Figure 3) and may includes a driving chip 56 and a main board 57. The driving chip 56 may be a DLP (Digital Light Processor) chip.

The first heat absorbing element 10 is conductively connected to the image device 51 to absorb heat generated by the image device 51 during operation and may include a first heat absorbing plate 11 in contact with the image device 51. Although the first heat absorbing plate 11 may be in contact with the image device 51, it may also be connected to the image device 51 through a supporting member disposed between the first heat absorbing plate 11 and the image device 51. The supporting member may be made of a material having high heat conductivity.

The size of the first heat absorbing plate 11 may be varied as needed and may depend on the size of the image device 51. Alternatively, the size of the first heat absorbing plate 11 may be provided to extend over the whole rear side of the image projecting apparatus 1. The first heat absorbing plate 11 may lie in contact with a part of the light generating portion 61 as well as the image device 51, so that the first heat absorbing plate 11 absorbs heat generated by the light generating part 61.

The first heat absorbing plate 11 may include a main body combining part 40 combined to the main body frame 7, a heat sink combining part 37 combined to the heat sink 35, and a cooling fan combining part 33 combined to the cooling fan 31. The first heat absorbing plate 11 may further include a first guiding part 16 to accommodate a heat transferring member 41 and a second guiding part 15 to accommodate a third heat absorbing plate 17.

The third heat absorbing plate 17 has both end parts conductively connected to the driving part 55 and the first heat absorbing plate 11 and may have a multiplicity of air holes extending along its longitudinal direction on the interior (that is, in a direction from the driving part 55 to the first heat absorbing plate 11).

The second heat absorbing portion 20 transfers heat from the light generating portion 61 and absorbs heat generated by the light generating portion 61. The second heat absorbing element 20 may include second heat absorbing plates 23a and 23b that contact the light generating part 61. A plurality of second heat absorbing plates 23a and 23b may also be provided. The second heat absorbing element 20 may further include at least one connecting member 21 to connect each of the second heat absorbing plates 23a, 23b. For example, the connecting member 21 may be a heat pipe.

The second heat absorbing element 20 includes an accommodating part 27 to accommodate the connecting member 21 and/or the heat transferring member 41. The accommodating part 27 may, for example, be provided on the second heat absorbing plate 23b. The accommodating part 27 is preferably provided corresponding to the sectional shape of the heat transferring member 41 to increase contact area between the heat transferring member 41 and the second heat absorbing plates 23a, 23b so that a large amount of heat is transferable therebetween.

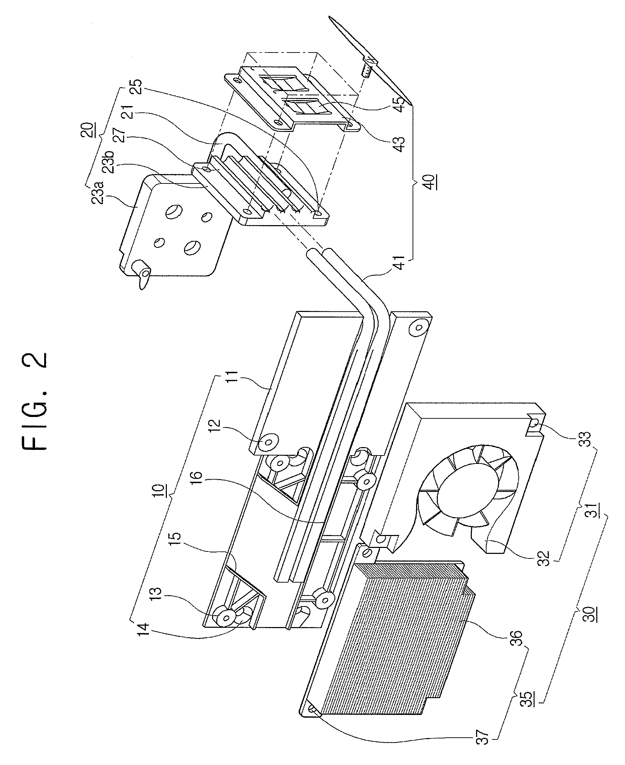

The heat dissipating part 30 is provided at a part of the body portion 7 to transfer heat to one or both of the first and second heat absorbing elements 10,20. The heat dissipating part 30 may include a heat sink 35 and a cooling fan 31 to blow cool air toward the heat sink 35. The heat dissipating part 30 collects heat generated by the light generating part 61 and the image device 51 through heat absorbing parts 10, 20 and dissipates the collected heat to outside. It will be appreciated that a heat dissipating part 30 may be provided not only for the first heat absorbing element 10, as shown in FIG. 2, but also for the second heat absorbing element 20. For example, if a heat dissipating part 30 is provided for the first heat absorbing element 10, the heat generated by each heat source, which comprises the image device 51, the light generating part 61, and the driving part 55, is collected by the first heat absorbing element 10, and if a heat dissipating part 30 is provided for the second heat absorbing element 20, at least some of the heat generated by each heat source may be collected by the second heat absorbing element 20.

The heat sink 35 is conductively connected to the first heat absorbing element 10 and the second heat absorbing part 20 and heat collected by the heat sink 35 is emitted to the outside when the cooling fan 31 is operational. The shape of the heat sink 35 may be varied to enhance cooling efficiency. For example, the heat sink 35 may include cooling fins 36 having a multiplicity of protrusions on their surfaces.

A heat sink combining part 37 may be provided at one side of the heat sink 35 to attach the heat sink 35 to either the first heat absorbing plate 11 or the second heat absorbing plates 23a, 23b.

The cooling fan 31 may be disposed abreast the heat sink 35 to minimize volume required in cooling and may include a radial flow fan (not shown) that blows cooling air in radial directions. For example, the cooling fan 31 may include a Sirocco fan. The cooling fan 31 may have an open part 32 opened toward the heat sink 35. Also, a cooling fan combining part 33 is provided at one side of the cooling fan 31 to attach the cooling fan 31 to either the first heat absorbing plate 11 or the second heat absorbing plates 23a, 23b.

The combining part 40 separably combines the first and second heat absorbing elements 10,20 and transfers heat between them. The combining part 40 may include a heat transfer member 41 connected between the first and second heat absorbing elements 10, 20 and an attachment member 43 to couple the heat transfer member 41 to the first second heat absorbing elements 20.

The heat transfering member 41 may include, for example, a heat pipe such as a vacuum airtight tube which may have porous material on its inner wall. The porous material may contain small amounts of saturated working fluid, such as water, ethanol, acetone or any other suitable fluid. The working fluid absorbs heat and vaporizes at a high temperature part of the heat pipe. It then condenses and discharges heat to outside at a low temperature part of the heat pipe. The condensed working fluid at the lower temperature part goes back to the high temperature part by a capillary pressure difference occurring at the interface of the porous material between the low temperature part and the high temperature part, thereby completing the circulation of the cooling cycle.

A plurality of heat transfer members 41 may be provided. For example, the heat transfer member 41 may comprise two members, as shown in Figure 2, three members, or even more. One end part of the heat transfer member 41 is accommodated in the first guide part 16 of the first heat absorbing plate 11. The other end of the heat transfer member 41 is received in the accommodating part 27 of the second heat absorbing plates 23a, 23b.

The attachment member 43 attaches the heat transfer member 41 to the first and second heat absorbing elements 10, 20. The attachment member 43 may attach the heat transfer member 41 to the first and second heat absorbing elements 10,20 by various methods of attachment. For example, a part of the heat transfer member 41 corresponding to the first heat absorbing element 10 may be welded or bonded by adhesive, and a part of the heat transfer member 41 corresponding to the second heat absorbing element 20 may be provided with a supporting bracket 43 to fix the heat transfer member 41 to the second heat absorbing plates 23a, 23b.

The supporting bracket 43 may take the shape of a plate and a pressing member 45 may be provided in the support bracket 43 to press the heat transfer member 41 toward the second heat absorbing plates 23a, 23b. For example, the pressing member 45 may be a plate spring, as shown in Figure 2, which is integrally formed as a part of the support bracket 43 and exerts elastic pressure toward the second heat absorbing plates 23a, 23b. Alternatively, the pressing member 45 may be a coil spring or a sponge provided between the heat transfer member 41 and the support bracket 43. As the heat transfer member 41 is pressed against the second heat absorbing plates 23a, 23b, the pressing member 45 expands the contact area between the heat transfer member 41 and the second heat absorbing plates 23a, 23b so that a large amount of heat may be transferred.

As shown in Figure 5, the housing 3 of the image projecting apparatus 1 may be provided with an intake part 80 to supply outside air to the cooling fan 31, and an exhaust part 70 to discharge hot air blown over the heat sink 35 to outside. For example, as shown in Figure 5, the intake part 80 may be provided at part of the housing 3 corresponding to the position of the cooling fan 31 so that the inflowing air directly leads to the cooling fan 31. Also, the exhaust part 70 may be provided near the heat sink 35 so that the cooling air generated by the cooling fan 31 may directly flow via the heat sink 35 to outside (as shown in Figure 5). The housing 3 may be provided with a cable hole 4 to insert a power cable therethrough, a power switch 5 to turn on and off the image projecting apparatus 1, and function buttons 6 to operate the image projecting apparatus 1.

Referring to Figures 2 to 4, the following describes the processes of assembling and dissembling the cooling system in the image projecting apparatus having components as described above.

Firstly, as shown in Figure 2, the heat transfer member 41 is attached to the first guide part 16 on the first heat absorbing plate 11. Then, the heat sink 35 and the cooling fan 31 are attached to the first heat absorbing plate 11 with the open part 32 of the cooling fan 31 facing the heat sink 35. The third heat absorbing plate 17 may be added to absorb heat from the driving part 55.

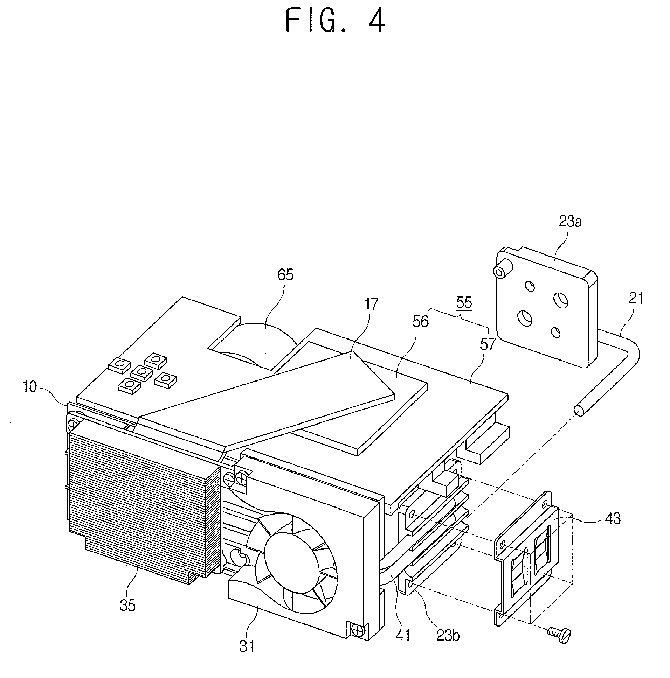

Next, the first heat absorbing element 10 with the heat dissipating part 30 attached thereto, is attached to the rear side of the body portion 7, that is, to the image device 51 (as shown in Figure 3). Accordingly, heat generated by the image device 51 is directly absorbed by the first heat absorbing plate 11. The absorbed heat is emitted to outside through the heat sink 35 attached to the first heat absorbing plate 11.
Finally, the second heat absorbing element 20 is attached to a side part and a front part of the body portion 7 to contact the light generating portion 61 (shown in Figure 4). The heat transfer member 41 attached to the first heat absorbing plate 11 is preferably accommodated in the accommodating part 27 provided on the second heat absorbing plates 23a, 23b, so that heat is transferred between the first and second heat absorbing elements 10, 20. Accordingly, heat generated by the light generating portion 61 may be absorbed by the second heat absorbing plates 23a, 23b, and transferred to the first heat absorbing plate 11 through the heat transfer member 41, and emitted to the outside through the heat sink 35. The heat transfer member 41 connected to the first heat absorbing plate 11 is fixed to the second heat absorbing plates 23a, 23b by the supporting bracket 43 and the pressing member 45 presses the second heat absorbing plates 23a, 23b, so that the contact area between the heat transfer member 41 and the second heat absorbing plates 23a, 23b is increased to enhance the heat transfer efficiency.

The cooling system of the image projecting apparatus described above is divided into first and second heat absorbing elements 10,20 during assembly and disassembly. Therefore, when the image projecting apparatus 1 is assembled, the first and second heat absorbing elements 10,20 are previously assembled and then integrally combined to the body portion 7, thereby enhancing assembly efficiency. Also, when the image projecting apparatus 1 is disassembled, it is not necessary to disassembly the whole apparatus, thus allowing repairs to be performed more easily.

Although a few exemplary embodiments of the present invention have been shown and described, it will be appreciated by those skilled in the art that changes may be made to these exemplary embodiments, all of which fall within the scope of which is defined in the appended claims.

## Claims

1. A projector having a plurality of components that generate heat when the projector is in use, a plurality of separate heat absorbing elements for absorbing heat generated by said heat generating components and, means for transferring heat between said separate heat absorbing elements.

2. A projector according to claim 1, wherein said plurality of components include a light generating portion and an image forming device for forming images using light irradiated by the light generating portion.

3. A projector according to claim 2, wherein said plurality of separate heat absorbing elements comprise a first heat absorbing element to absorb heat generated by the image forming device and, a second heat absorbing element to absorb heat generated by the light generating portion, said means for transferring heat between said separate heat absorbing elements comprising means for transferring heat between said first and second heat absorbing elements.

4. A projector according to any preceding claim, including a heat dissipating portion for dissipating heat from said first and second heat absorbing elements.

5. A projector according to claim 4, wherein the heat dissipating portion comprises a heat sink and a cooling fan to blow air to the heat sink.

6. A projector according to any preceding claim, wherein the means for transferring heat between the heat absorbing elements includes a heat transferring member connected between heat absorbing elements and attachment means for attaching the heat transferring member to the heat absorbing elements.

7. A projector according to claim 6, wherein the heat transfer member includes a heat pipe.

8. A projector according to any preceding claim wherein at least one heat absorbing element comprises a heat absorbing plate having a portion in contact with a heat generating component and, a receiving portion to receive the heat transfer member.

9. A projector according to claim 8, including a support bracket to attach the heat transfer member to said heat absorbing plate and, a pressing member to bias the heat transfer member toward the heat absorbing plate.

10. A projector according to claim 9, wherein the pressing member is a plate spring.

11. A projector according to any of claims 8 to 10, wherein the heat absorbing plate is a plurality of plates connected to each other by a heat pipe.

12. A projector according to claim 5, wherein an exhaust is disposed proximal the heat sink to vent air from the heat sink.

13. A projector according to claim 11, wherein the heat pipe is a vacuum airtight tube.

14. A projector according to claim 13, wherein an inner wall of the vacuum airtight tube has a fluid to facilitate cooling of the image projecting apparatus.
